# FASCICULE DE BREVET EUROPEEN

(11) **EP 3 327 274 B1**
(45) Date de publication et mention de la délivrance du brevet: **04.12.2019**
(21) Numéro de dépôt: 17195101.5
(22) Date de dépôt: 06.10.2017
(51) Int. Cl.: F02K 1/72, F02K 1/76

(54) **NACELLE D'UN TURBORÉACTEUR COMPORTANT UN VOLET INVERSEUR ET UN VOLET ADDITIONNEL**
TURBOTRIEBWERKSGONDELN UMFASSEND EINE UMKEHRKLAPPE UND EINE ZUSÄTZLICHE KLAPPE
TURBOJET NACELLE COMPRISING AN INVERSER FLAP AND AN ADDITIONAL FLAP

(30) Priorité: 28.11.2016 FR 1661549
(43) Date de publication de la demande: 30.05.2018
(73) Titulaire: Airbus Operations S.A.S., 31060 Toulouse (FR); Airbus (S.A.S.), 31700 Blagnac (FR)
(72) Inventeur: OBERLE, Patrick, 82600 VERDUN SUR GARONNE (FR); OUNDJIAN, Franck, 31470 BONREPOS SUR AUSSONNELLE (FR); SURPLY, Thierry, 31700 CORNEBARRIEU (FR); BILLEROT, Vincent, 31470 FONSORBES (FR); PIARD, Frédéric, 31170 TOURNEFEUILLE (FR); HARAMBURU, Eric, 31770 COLOMIERS (FR); LETAY, Benoit, 31620 BOULOC (FR); PORTE, Alain, 31770 COLOMIERS (FR); SAUVALLE, Thomas, 31000 TOULOUSE (FR)
(74) Mandataire: Gicquel, Olivier Yves Gérard

(56) Documents cités:
- EP-A2- 2 409 921
- EP-A2- 2 573 375
- WO-A1-2014/199067
- US-A- 3 036 431
- US-A- 4 073 440

## Description

### DOMAINE TECHNIQUE

La présente invention concerne une nacelle d'un turboréacteur double flux qui comporte un volet inverseur et un volet additionnel, un turboréacteur double flux comportant une telle nacelle et un moteur, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

On connaît du brevet US4073440, une nacelle comportant un capot fixe et un capot mobile qui se déplace en translation vers l'arrière de la nacelle pour ouvrir une fenêtre entre la veine de la nacelle dans laquelle s'écoule le flux secondaire et l'extérieur. La nacelle présente un volet inverseur qui est monté mobile sur la structure fixe de la nacelle entre une position fermée dans laquelle il obture (au moins en partie) la fenêtre et une position ouverte dans laquelle il n'obture pas la fenêtre.

Lorsque le volet inverseur est en position ouverte, le volet inverseur vient en travers de la veine et dévie au moins une partie du flux secondaire vers l'extérieur à travers la fenêtre.

Un mécanisme d'entraînement prenant la forme d'un écrou et d'une tige filetée permet un déplacement en translation du capot mobile qui est synchronisé avec un déplacement en rotation du volet inverseur.

La nacelle comporte en outre un volet additionnel qui est monté mobile en rotation entre une position escamotée dans laquelle il ne se positionne pas dans la veine et une position active dans laquelle il se positionne en travers de la veine. Le volet additionnel prolonge le volet inverseur jusqu'à la paroi interne de la veine secondaire. Le mécanisme d'entraînement permet également le déplacement du volet additionnel.

On connaît également le brevet US3036431 qui décrit une nacelle comportant un capot fixe et un capot mobile qui se déplace en translation vers l'arrière de la nacelle pour ouvrir une fenêtre entre la veine de la nacelle dans laquelle s'écoule le flux secondaire et l'extérieur. La nacelle présente deux volets inverseurs, s'étendant dans deux plans distincts sensiblement parallèles, qui sont montés mobiles sur la structure fixe de la nacelle entre une position fermée dans laquelle ils obturent (au moins en partie) la fenêtre et une position ouverte dans laquelle ils n'obturent pas la fenêtre.

Les volets inverseurs viennent, dans la position ouverte, en travers de la veine et dévient au moins une partie du flux secondaire vers l'extérieur à travers la fenêtre.

Un mécanisme d'entraînement prenant la forme d'un vérin permet un déplacement en translation du capot mobile une fois que le capot mobile a été déplacé vers l'arrière de la nacelle.

Bien que les mécanismes d'entraînement des volets inverseurs décrits dans les deux brevets susmentionnés donnent entière satisfaction, il est souhaitable de trouver des mécanismes différents

### EXPOSE DE L'INVENTION

Un objet de la présente invention est de proposer une nacelle comportant au moins un volet inverseur associé à un volet additionnel avec un mécanisme d'entraînement différent. A cet effet, est proposée une nacelle selon la revendication 1 ou la revendication 2.

L'invention propose également un turboréacteur double flux comportant un moteur et une nacelle selon l'invention entourant le moteur, et où une veine d'un flux secondaire est délimitée entre la nacelle et le moteur.

L'invention propose également un aéronef comportant au moins un turboréacteur double flux.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention, la nacelle comprenant un volet inverseur et un volet additionnel,
la Fig. 2 est une vue, à titre illustratif, en perspective d'une nacelle en position ouverte,
la Fig. 3 est une vue, à titre illustratif, en coupe par un plan radial d'une nacelle en position ouverte,
la Fig. 4 est une vue, à titre illustratif, de dessus d'une nacelle en position ouverte pour une première variante d'un mécanisme d'entraînement,
la Fig. 5 est une vue, à titre illustratif, de dessus d'une nacelle en position ouverte pour une deuxième variante d'un mécanisme d'entraînement,
la Fig. 6 est une représentation schématique en coupe d'une nacelle selon un mode de réalisation de l'invention,
les Figs. 7A-C montrent un mode de réalisation selon l'invention d'une liaison entre un capot mobile et un volet inverseur dans différentes positions, et
les Figs. 8A-C montrent un autre mode de réalisation selon l'invention d'une liaison entre un capot mobile et un volet inverseur dans différentes positions.

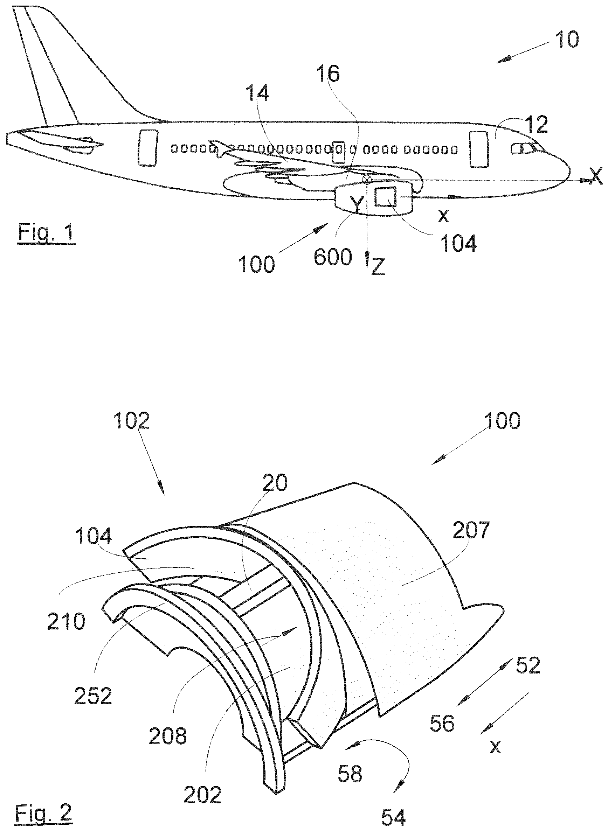

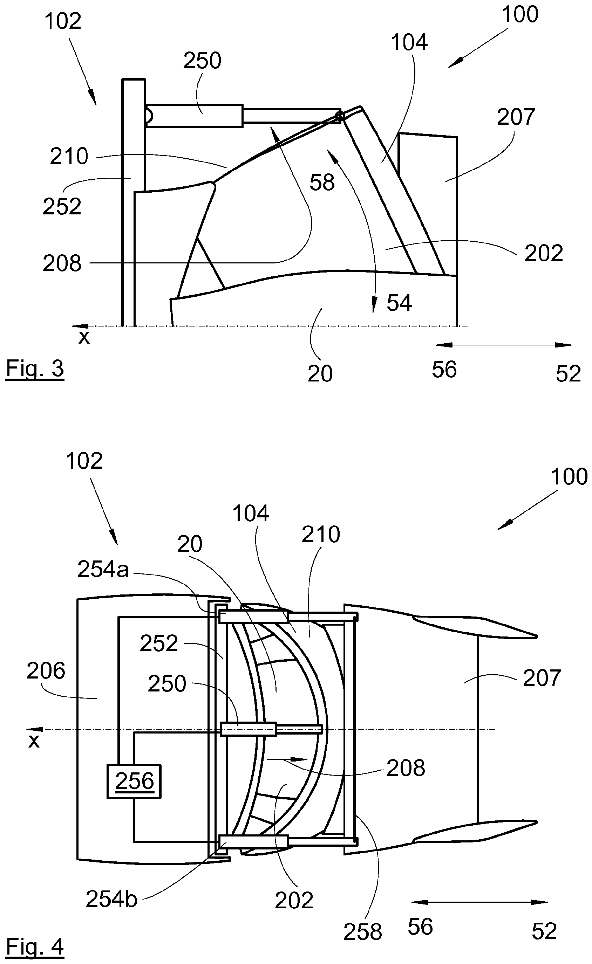

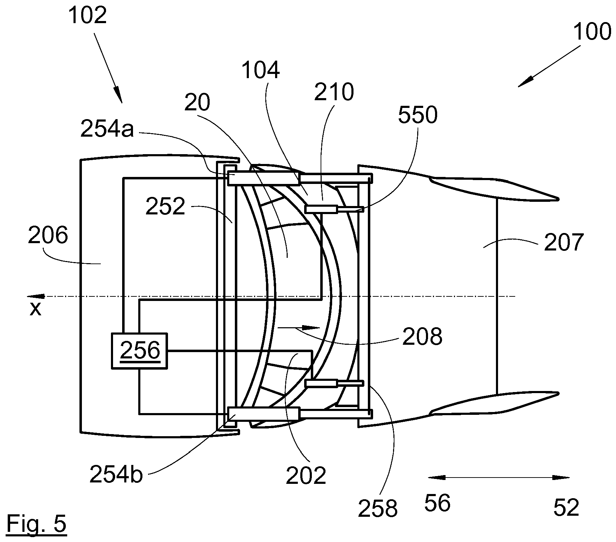

Les figures 2 à 5 sont des figures à titre illustratif qui sont des vues d'une nacelle comportant un volet inverseur non associé à un volet additionnel. Les éléments montrés dans ces figures ne font pas partie de l'invention. Les références des figures 2 à 5 qui sont identiques aux références des figures 1, 6 à 8c désignent des mêmes éléments.

### EXPOSE DETAILLE DE MODES DE REALISATION

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

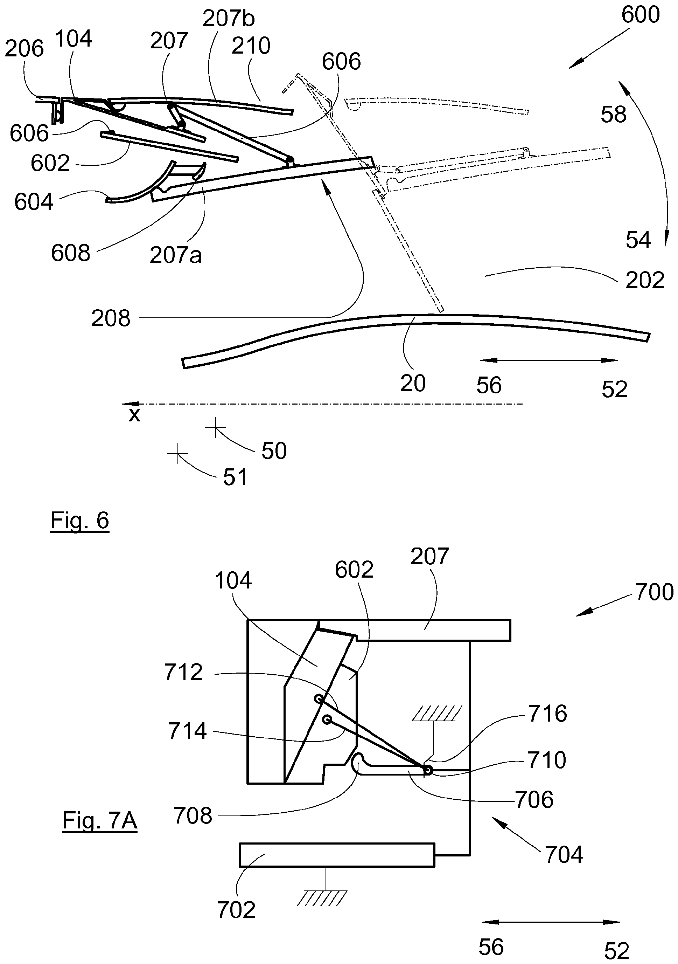

En référence avec les figures 1 et 6, le turboréacteur double flux 100 comporte une nacelle 600 et un moteur qui est logé à l'intérieur de la nacelle 600.

Le turboréacteur double flux 100 présente une veine 202 entre la nacelle 600 et le moteur 20 dans laquelle circule le flux secondaire 208.

Dans la description qui suit, et par convention, on appelle x l'axe longitudinal de la nacelle 102 qui est parallèle à l'axe longitudinal X de l'aéronef 10 ou axe de roulis, orienté positivement dans le sens d'avancement de l'aéronef 10, on appelle Y l'axe transversal ou axe de tangage de l'aéronef qui est horizontal lorsque l'aéronef est au sol, et Z l'axe vertical ou hauteur verticale ou axe de lacet lorsque l'aéronef est au sol, ces trois directions X, Y et Z étant orthogonales entre elles et formant un repère orthonormé ayant pour origine le centre de gravité de l'aéronef.

La nacelle 600 comporte au moins un volet inverseur 104. En particulier, il peut y avoir deux volets inverseurs 104 disposés l'un en face de l'autre, ou quatre volets inverseurs 104 répartis régulièrement sur la périphérie de la nacelle 600.

Dans la description qui suit, l'invention est plus particulièrement décrite pour un volet inverseur 104, mais elle s'applique de la même manière pour chaque volet inverseur 104 lorsqu'il y en a plusieurs.

La nacelle 600 présente pour chaque volet inverseur 104, une fenêtre 210 ouverte entre la veine 202 et l'extérieur de la nacelle 102.

La nacelle 600 présente un capot fixe 206 qui délimite la fenêtre 210 en amont par rapport à l'axe longitudinal x et qui est monté fixe sur une structure de la nacelle 102.

La nacelle 600 présente un capot mobile 207 qui délimite la fenêtre 210 en aval par rapport à l'axe longitudinal x. Le capot mobile 207 est monté mobile en translation selon une direction de translation globalement parallèle à l'axe longitudinal x sur la structure de la nacelle 600. La translation est réalisée par tous moyens appropriés comme par exemple des glissières.

Le capot fixe 206 et le capot mobile 207 présentent une surface extérieure qui constitue l'enveloppe extérieure de la nacelle 600 et une surface intérieure qui constitue une paroi extérieure de la veine 202.

Le capot mobile 207 est mobile entre une position de fermeture dans laquelle il est rapproché du capot fixe 206 et une position d'ouverture dans laquelle il est éloigné du capot fixe 206 vers l'arrière de manière à élargir la fenêtre 210.

Le volet inverseur 104 est monté mobile en rotation autour d'un axe de rotation 50 sur la structure de la nacelle 600 entre une position fermée dans laquelle il obture la fenêtre 210 et une position ouverte dans laquelle il n'obture pas la fenêtre 210.

En position fermée, le volet inverseur 104 se positionne entre le capot fixe 206 et le capot mobile 207 qui est en position de fermeture et le volet inverseur 104 prolonge le capot mobile 207, et le capot fixe 206 prolonge le volet inverseur 104. En position ouverte, le capot mobile 207 est déplacé vers l'arrière pour faciliter la manœuvre du volet inverseur 104 qui passe de la position fermée à la position ouverte.

Lorsque le volet inverseur 104 est en position fermée, la surface extérieure du volet inverseur 104 s'étend entre la surface extérieure du capot fixe 206 et la surface extérieure du capot mobile 207 et sa surface intérieure s'étend entre la surface intérieure du capot fixe 206 et la surface intérieure du capot mobile 207 pour délimiter la veine 202.

Lorsque le volet inverseur 104 est en position ouverte, le volet inverseur 104 vient en travers de la veine 202 et dévie au moins une partie du flux secondaire 208 vers l'extérieur à travers la fenêtre 210.

Le passage de la position fermée à la position ouverte du volet inverseur 104 est coordonné avec le passage de la position de fermeture à la position d'ouverture du capot mobile 207 et inversement.

Cette coordination est assurée par un mécanisme d'entraînement qui réalise, à partir de la position fermée et de la position de fermeture, une première combinaison assurant :
- une translation vers l'arrière (flèche 52) du capot mobile 207 selon une direction de translation globalement parallèle à l'axe longitudinal x qui assure le déplacement du capot mobile 207 de la position de fermeture à la position d'ouverture, et
- une rotation (flèche 54) du volet inverseur 104 autour de l'axe de rotation qui assure le déplacement du volet inverseur 104 de la position fermée à la position ouverte.

A l'inverse, le passage de la position ouverte à la position fermée du volet inverseur 104 est assuré par le même mécanisme qui est également prévu pour réaliser une deuxième combinaison assurant à partir de la position ouverte et de la position d'ouverture :
- une rotation (flèche 58) en sens inverse du volet inverseur 104 autour de l'axe de rotation qui assure le retour du volet inverseur 104 de la position ouverte à la position fermée, et
- une translation vers l'avant (flèche 56) du capot mobile 207 selon la direction de translation qui assure le déplacement du capot mobile 207 de la position d'ouverture à la position de fermeture.

Sur la Fig. 6, les éléments en traits pleins représentent les éléments dans la position fermée/de fermeture et les éléments en traits mixtes représentent les mêmes éléments dans la position ouverte/d'ouverture.

Pour combler l'espace entre le volet inverseur 104 et le moteur 20, la nacelle 600 présente un volet additionnel 602 qui, en position ouverte/d'ouverture s'étend entre le volet inverseur 104 et le moteur 20 afin d'obturer la veine 202. La mise en place d'un tel volet additionnel 602 permet également d'améliorer la déviation du flux secondaire 208 vers l'avant et de réduire le bruit.

Le volet additionnel 602 est mobile entre une position escamotée (traits pleins) dans laquelle il ne se positionne pas dans la veine 202 et une position active (traits mixtes) dans laquelle il se positionne en travers de la veine 202 pour dévier le flux secondaire 208. Le passage de la position escamotée à la position active s'effectue de manière coordonnée avec le passage de la position fermée à la position ouverte et inversement. En position active, le volet additionnel 602 prolonge ainsi le volet inverseur 104 en position ouverte dans la veine 202 jusqu'au moteur 20 pour dévier le flux secondaire 208.

Le capot mobile 207 présente une paroi intérieure 207a et une paroi extérieure 207b qui se déplacent de la même manière et simultanément. La paroi extérieure 207b est la paroi qui vient dans le prolongement du volet inverseur 104 en position de fermeture et qui constitue une paroi extérieure de la nacelle 600 et la paroi intérieure 207a définit la surface périphérique de la veine 202 autour du moteur 20.

En position de fermeture/fermée, le volet inverseur 104 est logé en partie entre la paroi intérieure 207a et la paroi extérieure 207b, et le volet additionnel 602 est en position escamotée et logé entre la paroi intérieure 207a et la paroi extérieure 207b.

En position d'ouverture/ouverte, le volet inverseur 104 et le volet additionnel 602 en position active se positionnent en amont de la paroi intérieure 207a et de la paroi extérieure 207b et en travers de la veine 202.

La nacelle 600 présente également une paroi amont 604 qui s'étend en amont de la paroi intérieure 207a par rapport à l'axe longitudinal x et qui constitue une paroi extérieure de la veine 202 autour du moteur 20. La paroi amont 604 est fixe par rapport à la structure de la nacelle 600 et se situe sensiblement au niveau du cadre avant. En position de fermeture, au niveau d'une extrémité amont, la paroi intérieure 207a prolonge la paroi amont 604 et en position d'ouverture, la paroi intérieure 207a est éloignée de la paroi amont 604 de manière à ouvrir le passage entre la veine 202 et la fenêtre 210 et à y permettre la mise en place du volet inverseur 104 et du volet additionnel 602.

Dans le mode de réalisation de l'invention présenté sur la Fig. 6, le mécanisme d'entraînement comprend des moyens pour déplacer le capot mobile 207 de la position de fermeture à la position d'ouverture et inversement, et ils peuvent comporter à cet effet, par exemple des glissières, des vérins, des moteurs ou tout autre moyen approprié pour déplacer un élément en translation.

Le mécanisme d'entraînement comprend également ici un ensemble de tringles qui comprend ici deux tringles articulées l'une avec l'autre et dont l'extrémité de l'une est articulée sur le capot mobile 207, ici sur la paroi intérieure 207a, et dont l'extrémité de l'autre est articulée sur le volet inverseur 104.

Ainsi, le déplacement du capot mobile 207 entraîne un mouvement des tringles qui tire ou repousse le volet inverseur 104.

Le volet additionnel 602 est également monté ici mobile en rotation autour d'un axe de rotation 51 sur la structure de la nacelle 600 pour passer de la position escamotée à la position active et inversement. Ici les deux axes de rotation 50 et 51 sont différents, mais dans d'autres configurations, ils peuvent être identiques.

Les mouvements du volet additionnel 602 sont similaires et synchronisés avec ceux du volet inverseur 104. A cette fin, le mécanisme d'entraînement comprend des moyens additionnels qui coordonnent les mouvements du volet additionnel 602 à ceux du volet inverseur 104, c'est-à-dire qu'ils coordonnent le passage du volet additionnel 602 de la position escamotée à la position active avec le passage du volet inverseur 104 de la position fermée à la position ouverte et inversement. Ces moyens additionnels sont par exemple des tringles qui relient le volet additionnel 602 et le volet inverseur 104, un moteur ou des vérins commandés en fonction du mouvement du volet inverseur 104.

Pour assurer une bonne étanchéité entre le volet inverseur 104 et le volet additionnel 602, celui-ci présente un joint 606, du type joint à lèvre, qui se plaque contre le volet inverseur 104 en position ouverte/active. Le joint 606 se positionne donc entre le volet inverseur 104 et le volet additionnel 602.

Pour contrôler encore mieux le flux secondaire 208 lorsque la fenêtre 210 est ouverte, la nacelle 600 comporte au moins un déflecteur 608 qui est disposé autour de la veine 202 au niveau de l'entrée de la fenêtre 210, c'est-à-dire globalement au niveau de la zone de passage de la veine 202 à la fenêtre 210.

Chaque déflecteur 608 est fixé à la structure de la nacelle 600, et il est fixé ici à la paroi amont 604. Chaque déflecteur 608 prend la forme d'un aileron qui oriente le flux secondaire 208 vers la fenêtre 210.

En position de fermeture, chaque déflecteur 608 est logé dans le capot mobile 207, c'est-à-dire entre la paroi intérieure 207a et la paroi extérieure 207b.

Le mécanisme d'entraînement peut être prévu pour assurer des déplacements simultanés du volet inverseur 104 et du capot mobile 207 durant les deux combinaisons tant que les caractéristiques dimensionnelles du volet inverseur 104 et du capot mobile 207 ne créent pas d'interférences entre eux durant les déplacements.

Le mécanisme d'entraînement peut également être prévu pour assurer un déplacement retardé du volet inverseur 104 durant la première combinaison, et un déplacement retardé du capot mobile 207 durant la deuxième combinaison.

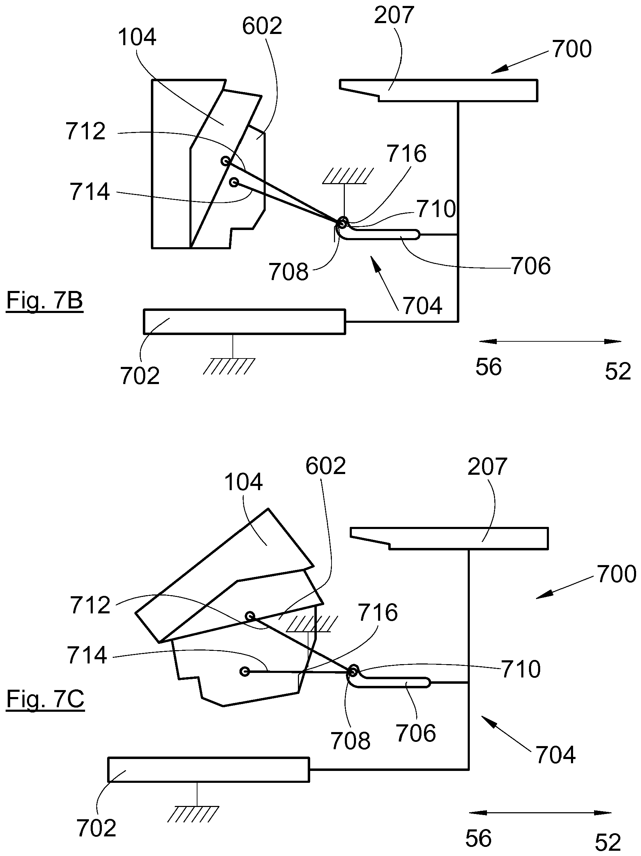

Les Figs. 7A-C montrent un exemple de mécanisme d'entraînement 700 dans une position de fermeture/fermée/escamotée pour la Fig. 7A, une position d'ouverture/ouverte/active pour la Fig. 7C et une position intermédiaire pour la Fig. 7B.

Le mécanisme d'entraînement 700 est décrit ici dans le cadre de la nacelle 600 avec le volet inverseur 104 et le volet additionnel 602 et dans ce mode de réalisation, les déplacements du volet inverseur 104 et du volet additionnel 602 sont retardés par rapport au déplacement du capot mobile 207.

Le mécanisme d'entraînement 700 comporte un élément moteur 702 avec une partie mobile solidaire du capot mobile 207 pour l'entraîner en translation. L'élément moteur 702 peut être par exemple un vérin, ou un moteur avec une crémaillère.

Le mécanisme d'entraînement 700 présente un guide 704 solidaire du capot mobile 207 et qui comprend une partie glissière 706 dont l'axe est parallèle à la direction de translation du capot mobile 207 et une partie rotation 708 qui prolonge vers l'avant la partie glissière 706, et qui est décalée par rapport à la partie glissière 706 par rapport à la direction de translation.

Le mécanisme d'entraînement 700 comprend également un coulisseau 710 logé dans le guide 704.

Le mécanisme d'entraînement 700 comprend également une première tringle 712 articulée entre le coulisseau 710 et le volet inverseur 104, et une deuxième tringle 714 articulée entre le coulisseau 710 et le volet additionnel 602.

Le mécanisme d'entraînement 700 comprend également une butée 716 qui est prévue pour déplacer le coulisseau 710 de la partie rotation 708 vers la partie glissière 706 lorsque le volet inverseur 104 est en position fermée et le volet additionnel 602 en position escamotée et que le capot mobile 207 se déplace de la position d'ouverture à la position de fermeture. La butée 716 prend ici la forme d'une rampe qui descend le coulisseau 710.

Le fonctionnement est alors le suivant à partir de la position de fermeture/fermée/escamotée :
- l'élément moteur 702 déplace le capot mobile 207 et le guide 704 vers l'arrière (52),
- le coulisseau 710 reste alors immobile tant qu'il se trouve dans la partie glissière 706 et ni le volet inverseur 104, ni le volet additionnel 602 ne se déplace,
- lorsque le coulisseau 710 a atteint la fin de la partie glissière 706, il atteint la partie rotation 708 (Fig. 7B), qui contraint alors le coulisseau 710 à se déplacer avec le guide 704 qui continue à se déplacer en translation vers l'arrière sous l'effet de l'élément moteur 702, et
- la poursuite de la translation du guide 704 entraîne le déplacement du coulisseau 710 dans la même direction (52) qui tire sur la première tringle 712 et la deuxième tringle 714, provoquant la rotation du volet inverseur 104 et du volet additionnel 602 jusqu'à la position ouverte/active (Fig. 7C) et dans le même temps, le capot mobile 207 atteint la position d'ouverture.

Le fonctionnement est alors le suivant à partir de la position d'ouverture/ouverte/active :
- l'élément moteur 702 déplace le capot mobile 207 et le guide 704 vers l'avant (56), et comme la partie rotation 708 est décalée par rapport à la partie glissière 706, le coulisseau 710 y reste coincé et se déplace en translation simultanément en provoquant la rotation du volet inverseur 104 et du volet additionnel 602 jusqu'à la position fermée/escamotée (Fig. 7B) en repoussant la première tringle 712 et la deuxième tringle 714,
- le coulisseau 710 atteint alors la butée 716 et la poursuite de la translation du guide 704 entraîne le déplacement du coulisseau 710 de la partie rotation 708 vers la partie glissière 706,
- la poursuite de la translation du guide 704 s'effectue alors tandis que le coulisseau 710 reste immobile dans la partie glissière 706 jusqu'au déplacement du capot mobile 207 jusqu'à sa position de fermeture (Fig. 7A).

Les moyens additionnels sont ici constitués entre autres de la deuxième tringle 714.

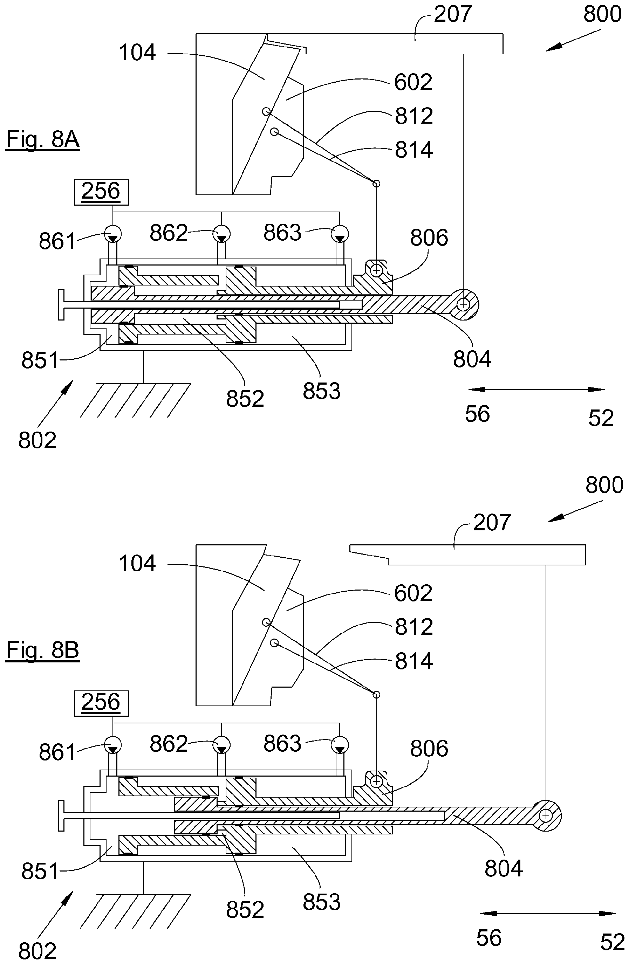

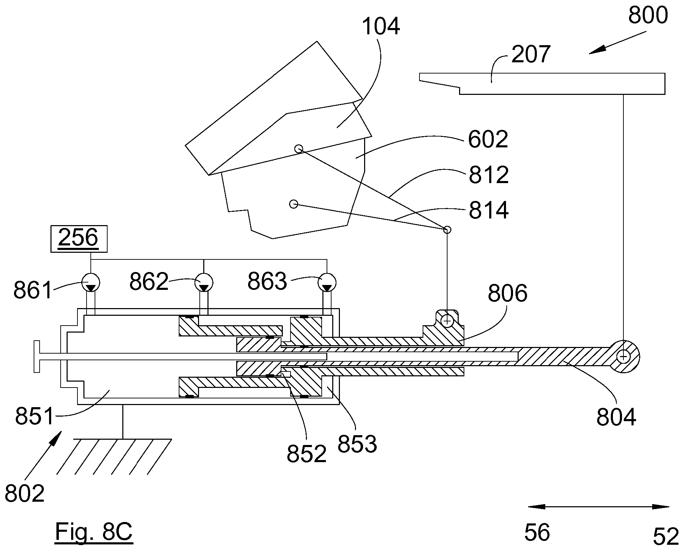

Les Figs. 8A-C montrent un autre exemple de mécanisme d'entraînement 800 dans une position de fermeture/fermée/escamotée pour la Fig. 8A, une position d'ouverture/ouverte/active pour la Fig. 8C et une position intermédiaire pour la Fig. 8B.

Le mécanisme d'entraînement 800 est décrit ici dans le cadre de la nacelle 600 avec le volet inverseur 104 et le volet additionnel 602 et dans ce mode de réalisation, les déplacements du volet inverseur 104 et du volet additionnel 602 sont retardés par rapport au déplacement du capot mobile 207.

Le mécanisme d'entraînement 800 comporte un vérin 802 à deux tiges chacune constituant une partie mobile. La première tige 804 est solidaire du capot mobile 207 pour l'entraîner en translation et la deuxième tige 806 est solidaire du volet inverseur 104 et du volet additionnel 602 pour les entraîner en rotation. A cette fin, le mécanisme d'entraînement 800 comprend une première tringle 812 articulée entre la deuxième tige 806 et le volet inverseur 104, et une deuxième tringle 814 articulée entre la deuxième tige 806 et le volet additionnel 602.

Chaque tige 804, 806 est mobile en translation parallèlement à la direction de translation du capot mobile 207 entre une position rétractée (Fig. 8A) et une position déployée (Fig. 8C).

Dans le mode de réalisation de l'invention présenté ici, les tiges se déplacent dans le même sens, mais une autre architecture est possible. De la même manière, dans le mode de réalisation de l'invention présenté ici, chaque tige passe de la position rétractée à la position déployée pour passer de la position de fermeture/fermée/escamotée à la position d'ouverture/ouverte/active et inversement, mais une configuration différente est possible.

Le vérin 802 présente des moyens d'activation dont un mode de réalisation particulier est décrit ci-après et qui sont prévus pour déplacer sélectivement la première tige 804 et la deuxième tige 806.

Le fonctionnement est alors le suivant à partir de la position de fermeture/fermée/escamotée :
- les moyens d'activation déplacent la première tige 804 vers l'arrière afin de déplacer le capot mobile 207 vers l'arrière (52) jusqu'à une position intermédiaire (Fig. 8B),
- les moyens d'activation déplacent la première tige 804 et la deuxième tige 806 vers l'arrière afin de déplacer le capot mobile 207 vers l'arrière pour atteindre la position d'ouverture et de tirer sur la première tringle 812 et la deuxième tringle 814, provoquant la rotation du volet inverseur 104 et du volet additionnel 602 jusqu'à la position ouverte/active (Fig. 8C).

Le fonctionnement est alors le suivant à partir de la position d'ouverture/ouverte/active :
- les moyens d'activation déplacent la première tige 804 et la deuxième tige 806 vers l'avant afin de déplacer le capot mobile 207 vers l'avant (56) pour atteindre la position intermédiaire et de repousser la première tringle 812 et la deuxième tringle 814, provoquant la rotation inverse du volet inverseur 104 et du volet additionnel 602 jusqu'à la position fermée/escamotée (Fig. 8B),
- les moyens d'activation continuent de déplacer la première tige 804 vers l'avant afin de déplacer le capot mobile 207 vers l'avant jusqu'à sa position de fermeture (Fig. 8A).

Les moyens additionnels sont ici constitués entre autres de la deuxième tringle 814.

Les moyens d'activation sont constitués d'un circuit hydraulique qui comprend :
- une première chambre 851 définie entre le fond du vérin 802 et la première tige 804,
- une deuxième chambre 852 définie entre la première tige 804 et la deuxième tige 806,
- une troisième chambre 853 définie entre la deuxième tige 806 et la partie frontale du vérin 802,
- une première source de pression 861 prévue pour alimenter en pression la première chambre 851,
- une deuxième source de pression 862 prévue pour alimenter en pression la deuxième chambre 852,
- une troisième source de pression 863 prévue pour alimenter en pression la troisième chambre 853,
- l'unité de contrôle 256 prévue pour commander chaque source de pression 861, 862, 863 afin qu'elle délivre une haute pression, ou une basse pression, ou une pression intermédiaire.

En position de fermeture/fermée/escamotée, la distribution de pression est la suivante :
- basse pression dans la première chambre 851, et
- haute pression dans la deuxième 852 et la troisième 853 chambres.

Pour passer de la position de fermeture à la position intermédiaire pour le capot mobile 207, la distribution de pression est la suivante :
- pression intermédiaire dans la première chambre 851,
- basse pression dans la deuxième chambre 852, et
- haute pression dans la troisième chambre 853.

Pour passer de la position intermédiaire à la position d'ouverture pour le capot mobile 207, et de la position fermée/escamotée à la position ouverte/active pour le volet inverseur 104 et le volet additionnel 602, la distribution de pression est la suivante :
- pression intermédiaire dans la première chambre 851, et
- basse pression dans la deuxième 852 et la troisième 853 chambres.

Pour passer de la position d'ouverture/ouverte/active, à la position intermédiaire pour le capot mobile 207 et à la position fermée/escamotée pour le volet inverseur 104 et le volet additionnel 602, la distribution de pression est la suivante :
- pression intermédiaire dans la première chambre 851, et
- basse pression dans la deuxième chambre 852, et
- haute pression dans la troisième chambre 853.

Pour passer de la position intermédiaire à la position de fermeture pour le capot mobile 207, la distribution de pression est la suivante :
- basse pression dans la première chambre 851, et
- haute pression dans la deuxième 852 et la troisième 853 chambres.

Selon un mode de réalisation particulier, la haute pression est de l'ordre de 200 bars, la basse pression est de l'ordre de 4 bars, et la pression intermédiaire est de l'ordre de 100 bars.

L'invention a été plus particulièrement décrite dans le cas d'une nacelle sous une aile mais elle peut s'appliquer à une nacelle située à l'arrière du fuselage.

## Revendications

1. Nacelle (600) pour un turboréacteur double flux (100), ladite nacelle (600) comportant :
- un capot fixe (206) et un capot mobile (207) mobile en translation selon une direction de translation entre une position de fermeture dans laquelle il est rapproché du capot fixe (206) et une position d'ouverture dans laquelle il est éloigné du capot fixe (206) vers l'arrière,
- une fenêtre (210) délimitée en amont par le capot fixe (206) et en aval par le capot mobile (207), ladite fenêtre (210) étant ouverte entre une veine (202) d'un flux secondaire (208) et l'extérieur de la nacelle (600),
- un volet inverseur (104) monté mobile en rotation autour d'un axe de rotation entre une position fermée dans laquelle il obture la fenêtre (210) et une position ouverte dans laquelle il n'obture pas la fenêtre (210), et
- un mécanisme d'entraînement (700) prévu pour coordonner le passage de la position fermée à la position ouverte du volet inverseur (104) avec le passage de la position de fermeture à la position d'ouverture du capot mobile (207) et inversement, ledit mécanisme d'entraînement étant prévu pour réaliser une première combinaison assurant, à partir de la position fermée et de la position de fermeture :
- une translation vers l'arrière (52) du capot mobile (207) selon la direction de translation pour déplacer le capot mobile (207) de la position de fermeture à la position d'ouverture, et
- une rotation (54) du volet inverseur (104) autour de l'axe de rotation pour déplacer le volet inverseur (104) de la position fermée à la position ouverte, et
le mécanisme d'entraînement (700) est également prévu pour réaliser une deuxième combinaison assurant, à partir de la position ouverte et de la position d'ouverture :
- une rotation (58) en sens inverse du volet inverseur (104) autour de l'axe de rotation pour déplacer le volet inverseur (104) de la position ouverte à la position fermée, et
- une translation vers l'avant (56) du capot mobile (207) selon la direction de translation pour déplacer le capot mobile (207) de la position d'ouverture à la position de fermeture,
la nacelle (600) comprenant en outre un volet additionnel (602) monté mobile en rotation autour d'un axe de rotation entre une position escamotée dans laquelle il ne se positionne pas dans la veine (202) et une position active dans laquelle il se positionne en travers de la veine (202) et prolonge le volet inverseur (104) en position ouverte dans la veine (202), le mécanisme d'entraînement comportant des moyens additionnels qui coordonnent le passage du volet additionnel (602) de la position escamotée à la position active avec le passage du volet inverseur (104) de la position fermée à la position ouverte et inversement,
**caractérisée en ce que** le mécanisme d'entraînement (700) comprend :
- un élément moteur (702) avec une partie mobile solidaire du capot mobile (207) pour l'entraîner en translation,
- un guide (704) solidaire du capot mobile (207) et qui comprend une partie glissière (706) dont l'axe est parallèle à la direction de translation du capot mobile (207) et une partie rotation (708) qui prolonge vers l'avant la partie glissière (706), et qui est décalée par rapport à la partie glissière (706),
- un coulisseau (710) logé dans le guide (704),
- une première tringle (712) articulée entre le coulisseau (710) et le volet inverseur (104),
- une deuxième tringle (714) articulée entre le coulisseau (710) et le volet additionnel (602),
- une butée (716) prévue pour déplacer le coulisseau (710) de la partie rotation (708) vers la partie glissière (706) lorsque le volet inverseur (104) est en position fermée et le volet additionnel (602) est en position escamotée et que le capot mobile (207) se déplace de la position d'ouverture à la position de fermeture.

2. Nacelle (600) pour un turboréacteur double flux (100), ladite nacelle (600) comportant :
- un capot fixe (206) et un capot mobile (207) mobile en translation selon une direction de translation entre une position de fermeture dans laquelle il est rapproché du capot fixe (206) et une position d'ouverture dans laquelle il est éloigné du capot fixe (206) vers l'arrière,
- une fenêtre (210) délimitée en amont par le capot fixe (206) et en aval par le capot mobile (207), ladite fenêtre (210) étant ouverte entre une veine (202) d'un flux secondaire (208) et l'extérieur de la nacelle (600),
- un volet inverseur (104) monté mobile en rotation autour d'un axe de rotation entre une position fermée dans laquelle il obture la fenêtre (210) et une position ouverte dans laquelle il n'obture pas la fenêtre (210), et
- un mécanisme d'entraînement (800) prévu pour coordonner le passage de la position fermée à la position ouverte du volet inverseur (104) avec le passage de la position de fermeture à la position d'ouverture du capot mobile (207) et inversement, ledit mécanisme d'entraînement étant prévu pour réaliser une première combinaison assurant, à partir de la position fermée et de la position de fermeture :
- une translation vers l'arrière (52) du capot mobile (207) selon la direction de translation pour déplacer le capot mobile (207) de la position de fermeture à la position d'ouverture, et
- une rotation (54) du volet inverseur (104) autour de l'axe de rotation pour déplacer le volet inverseur (104) de la position fermée à la position ouverte, et
le mécanisme d'entraînement (800) est également prévu pour réaliser une deuxième combinaison assurant, à partir de la position ouverte et de la position d'ouverture :
- une rotation (58) en sens inverse du volet inverseur (104) autour de l'axe de rotation pour déplacer le volet inverseur (104) de la position ouverte à la position fermée, et
- une translation vers l'avant (56) du capot mobile (207) selon la direction de translation pour déplacer le capot mobile (207) de la position d'ouverture à la position de fermeture,
la nacelle (600) comprenant en outre un volet additionnel (602) monté mobile en rotation autour d'un axe de rotation entre une position escamotée dans laquelle il ne se positionne pas dans la veine (202) et une position active dans laquelle il se positionne en travers de la veine (202) et prolonge le volet inverseur (104) en position ouverte dans la veine (202), le mécanisme d'entraînement comportant des moyens additionnels qui coordonnent le passage du volet additionnel (602) de la position escamotée à la position active avec le passage du volet inverseur (104) de la position fermée à la position ouverte et inversement,
**caractérisée en ce que** le mécanisme d'entraînement (800) comprend :
- un vérin (802) avec une première tige (804) solidaire du capot mobile (207) et une deuxième tige (806),
- des moyens d'activation prévus pour déplacer sélectivement la première tige (804) et la deuxième tige (806),
- une première tringle (812) articulée entre la deuxième tige (806) et le volet inverseur (104),
- une deuxième tringle (814) articulée entre la deuxième tige (806) et le volet additionnel (602).

3. Nacelle (600) selon l'une quelconque des revendications 1 ou 2, **caractérisée en ce que** le volet additionnel (602) porte un joint (606) qui se positionne entre le volet inverseur (104) et le volet additionnel (602), lorsque le volet inverseur (104) est en position ouverte et que le volet additionnel (602) est en position active.

4. Nacelle (600) selon l'une des revendications 1 ou 2, **caractérisée en ce qu'**elle comporte au moins un déflecteur (608) qui est disposé autour de la veine (202) au niveau de l'entrée de la fenêtre (210) et qui prend la forme d'un aileron qui oriente le flux secondaire (208) vers la fenêtre (210)

5. Turboréacteur double flux (100) comportant un moteur (20) et une nacelle (600) selon l'une des revendications 1 à 4 entourant le moteur (20), et où une veine (202) d'un flux secondaire (208) est délimitée entre la nacelle (600) et le moteur (20).

6. Aéronef (10) comportant au moins un turboréacteur double flux (100) selon la revendication 5.

## Patentansprüche

1. Gondel (600) für ein Zweistrom-Turbostrahltriebwerk (100), wobei die Gondel (600) aufweist:
- eine ortsfeste Verkleidung (206) und eine bewegliche Verkleidung (207), die gemäß einer Translationsrichtung zwischen einer Schließstellung, in der sie der ortsfesten Verkleidung (206) angenähert ist, und einer Öffnungsstellung translationsbeweglich ist, in der sie von der ortsfesten Verkleidung (206) nach hinten entfernt ist,
- ein Fenster (210), das stromaufwärts durch die ortsfeste Verkleidung (206) und stromabwärts durch die bewegliche Verkleidung (207) begrenzt wird, wobei das Fenster (210) zwischen einem Kanal (202) eines Sekundärstroms (208) und der Außenumgebung der Gondel (600) offen ist,
- eine Schubumkehrklappe (104), die um eine Drehachse zwischen einer geschlossenen Stellung, in der sie das Fenster (210) verschließt, und einer offenen Stellung drehbeweglich montiert ist, in der sie das Fenster (210) nicht verschließt, und
- einen Antriebsmechanismus (700), der vorgesehen ist, den Übergang der Schubumkehrklappe (104) von der geschlossenen Stellung in die offene Stellung mit dem Übergang der beweglichen Verkleidung (207) von der Schließstellung in die Öffnungsstellung und umgekehrt zu koordinieren, wobei der Antriebsmechanismus vorgesehen ist, um eine erste Kombination zu realisieren, die ausgehend von der geschlossenen Stellung und der Schließstellung gewährleistet:
- eine Translationsbewegung der beweglichen Verkleidung (207) nach hinten (52) gemäß der Translationsrichtung, um die bewegliche Verkleidung (207) von der Schließstellung in die Öffnungsstellung zu verschieben, und
- eine Drehung (54) der Schubumkehrklappe (104) um die Drehachse, um die Schubumkehrklappe (104) von der geschlossenen Stellung in die offene Stellung zu verschieben, und
wobei der Antriebsmechanismus (700) ebenfalls vorgesehen ist, um eine zweite Kombination zu realisieren, die ausgehend von der offenen Stellung und der Öffnungsstellung gewährleistet:
- eine Drehung (58) der Schubumkehrklappe (104) in Gegenrichtung um die Drehachse, um die Schubumkehrklappe (104) von der offenen Stellung in die geschlossene Stellung zu verschieben, und
- eine Translationsbewegung der beweglichen Verkleidung (207) nach vorne (56) gemäß der Translationsrichtung, um die bewegliche Verkleidung (207) von der Öffnungsstellung in die Schließstellung zu verschieben,
wobei die Gondel (600) außerdem eine zusätzliche Klappe (602) enthält, die zwischen einer eingezogenen Stellung, in der sie sich nicht im Kanal (202) positioniert, und einer aktiven Stellung um eine Drehachse drehbeweglich montiert ist, in der sie sich quer im Kanal (202) positioniert und die Schubumkehrklappe (104) in offener Stellung in den Kanal (202) verlängert, wobei der Antriebsmechanismus zusätzliche Einrichtungen aufweist, die den Übergang der zusätzlichen Klappe (602) von der eingezogenen Stellung in die aktive Stellung mit dem Übergang der Schubumkehrklappe (104) von der geschlossenen Stellung in die offene Stellung und umgekehrt koordinieren,
**dadurch gekennzeichnet, dass** der Antriebsmechanismus (700) enthält:
- ein Antriebselement (702) mit einem fest mit der beweglichen Verkleidung (207) verbundenen beweglichen Teil, um sie in Translationsbewegung zu versetzen,
- eine fest mit der beweglichen Verkleidung (207) verbundene Führung (704), die einen Gleitschienenteil (706), dessen Achse parallel zur Translationsrichtung der beweglichen Verkleidung (207) ist, und einen Drehteil (708) enthält, der den Gleitschienenteil (706) nach vorne verlängert, und der bezüglich des Gleitschienenteils (706) versetzt ist,
- ein Gleitstück (710), das in der Führung (704) untergebracht ist,
- eine erste Stange (712), die zwischen dem Gleitstück (710) und der Schubumkehrklappe (104) angelenkt ist,
- eine zweite Stange (714), die zwischen dem Gleitstück (710) und der zusätzlichen Klappe (602) angelenkt ist,
- einen Anschlag (716), der vorgesehen ist, um das Gleitstück (710) vom Drehteil (708) zum Gleitschienenteil (706) zu verschieben, wenn die Schubumkehrklappe (104) in geschlossener Stellung und die zusätzliche Klappe (602) in eingezogener Stellung ist und die bewegliche Verkleidung (207) sich von der Öffnungsstellung in die Schließstellung verschiebt.

2. Gondel (600) für ein Zweistrom-Turbostrahltriebwerk (100), wobei die Gondel (600) aufweist:
- eine ortsfeste Verkleidung (206) und eine bewegliche Verkleidung (207), die gemäß einer Translationsrichtung zwischen einer Schließstellung, in der sie der ortsfesten Verkleidung (206) angenähert ist, und einer Öffnungsstellung translationsbeweglich ist, in der sie von der ortsfesten Verkleidung (206) nach hinten entfernt ist,
- ein Fenster (210), das stromaufwärts durch die ortsfeste Verkleidung (206) und stromabwärts durch die bewegliche Verkleidung (207) begrenzt wird, wobei das Fenster (210) zwischen einem Kanal (202) eines Sekundärstroms (208) und der Außenumgebung der Gondel (600) offen ist,
- eine Schubumkehrklappe (104), die um eine Drehachse zwischen einer geschlossenen Stellung, in der sie das Fenster (210) verschließt, und einer offenen Stellung drehbeweglich montiert ist, in der sie das Fenster (210) nicht verschließt, und
- einen Antriebsmechanismus (700), der vorgesehen ist, den Übergang der Schubumkehrklappe (104) von der geschlossenen Stellung in die offene Stellung mit dem Übergang der beweglichen Verkleidung (207) von der Schließstellung in die Öffnungsstellung und umgekehrt zu koordinieren, wobei der Antriebsmechanismus vorgesehen ist, um eine erste Kombination zu realisieren, die ausgehend von der geschlossenen Stellung und der Schließstellung gewährleistet:
- eine Translationsbewegung der beweglichen Verkleidung (207) nach hinten (52) gemäß der Translationsrichtung, um die bewegliche Verkleidung (207) von der Schließstellung in die Öffnungsstellung zu verschieben, und
- eine Drehung (54) der Schubumkehrklappe (104) um die Drehachse, um die Schubumkehrklappe (104) von der geschlossenen Stellung in die offene Stellung zu verschieben, und
der Antriebsmechanismus (700) ebenfalls vorgesehen ist, um eine zweite Kombination zu realisieren, die ausgehend von der offenen Stellung und der Öffnungsstellung gewährleistet:
- eine Drehung (58) der Schubumkehrklappe (104) in Gegenrichtung um die Drehachse, um die Schubumkehrklappe (104) von der offenen Stellung in die geschlossene Stellung zu verschieben, und
- eine Translationsbewegung (56) der beweglichen Verkleidung (207) nach vorne gemäß der Translationsrichtung, um die bewegliche Verkleidung (207) von der Öffnungsstellung in die Schließstellung zu verschieben,
wobei die Gondel (600) außerdem eine zusätzliche Klappe (602) enthält, die um eine Drehachse zwischen einer eingezogenen Stellung, in der sie sich nicht im Kanal (202) positioniert, und einer aktiven Stellung drehbeweglich montiert ist, in der sie sich quer im Kanal (202) positioniert und die Schubumkehrklappe (104) in offener Stellung in den Kanal (202) verlängert, wobei der Antriebsmechanismus zusätzliche Einrichtungen aufweist, die den Übergang der zusätzlichen Klappe (602) von der eingezogenen Stellung in die aktive Stellung mit dem Übergang der Schubumkehrklappe (104) von der geschlossenen Stellung in die offene Stellung und umgekehrt koordinieren,
**dadurch gekennzeichnet, dass** der Antriebsmechanismus (800) enthält:
- einen Zylinder (802) mit einer fest mit der beweglichen Verkleidung (207) verbundenen ersten Kolbenstange (804) und einer zweiten Kolbenstange (806),
- Aktivierungseinrichtungen, die vorgesehen sind, um die erste Kolbenstange (804) und die zweite Kolbenstange (806) selektiv zu verschieben,
- eine erste Stange (812), die zwischen der zweiten Kolbenstange (806) und der Schubumkehrklappe (104) angelenkt ist,
- eine zweite Stange (814), die zwischen der zweiten Kolbenstange (806) und der zusätzlichen Klappe (602) angelenkt ist.

3. Gondel (600) nach einem der Ansprüche 1 oder 2, **dadurch gekennzeichnet, dass** die zusätzliche Klappe (602) eine Dichtung (606) trägt, die sich zwischen der Schubumkehrklappe (104) und der zusätzlichen Klappe (602) positioniert, wenn die Schubumkehrklappe (104) in offener Stellung und die zusätzliche Klappe (602) in aktiver Stellung ist.

4. Gondel (600) nach einem der Ansprüche 1 oder 2, **dadurch gekennzeichnet, dass** sie mindestens ein Leitblech (608) aufweist, das im Bereich des Eingangs des Fensters (210) um den Kanal (202) herum angeordnet ist und das die Form eines Querruders annimmt, das den Sekundärstrom (208) zum Fenster (210) ausrichtet.

5. Zweistrom-Turbostrahltriebwerk (100), das einen Motor (20) und eine Gondel (600) nach einem der Ansprüche 1 bis 4 aufweist, die den Motor (20) umgibt, und wobei ein Kanal (202) eines Sekundärstroms (208) zwischen der Gondel (600) und dem Motor (20) begrenzt ist.

6. Luftfahrzeug (10), das mindestens ein Zweistrom-Turbostrahltriebwerk (100) nach Anspruch 5 aufweist.

## Claims

1. Nacelle (600) for a turbofan (100), said nacelle (600) comprising:
- a fixed cowl (206) and a mobile cowl (207) mobile in translation in a translation direction between a closing position in which it is close to the fixed cowl (206) and an opening position in which it is far aft of the fixed cowl (206),
- a window (210) delimited on the upstream side by the fixed cowl (206) and on the downstream side by the mobile cowl (207), said window (210) being open between a duct (202) for a bypass flow (208) and the exterior of the nacelle (600),
- a reverser flap (104) mounted mobile in rotation about a rotation axis between a closed position in which it obstructs the window (210) and an open position in which it does not obstruct the window (210), and
- a drive mechanism (700) adapted to coordinate the passage from the closed position to the open position of the reverser flap (104) with the passage from the closing position to the opening position of the mobile cowl (207) and vice versa, said drive mechanism being adapted to realize a first combination assuring, from the closed position and from the closing position:
- an aft translation (52) of the mobile cowl (207) in the translation direction to move the mobile cowl (207) from the closing position to the opening position, and
- a rotation (54) of the reverser flap (104) about the rotation axis to move the reverser flap (104) from the closed position to the open position, and
the drive mechanism (700) is also provided to realize a second combination bringing about, from the open position and from the opening position:
- a rotation (58) in the reverse direction of the reverser flap (104) about the rotation axis to move the reverser flap (104) from the open position to the closed position, and
- a forward translation (56) of the mobile cowl (207) in the translation direction to move the mobile cowl (207) from the opening position to the closing position,
the nacelle (600) further comprising an additional flap (602) mounted mobile in rotation about a rotation axis between a retracted position in which it is not positioned in the duct (202) and an active position in which it is positioned across the duct (202) and extends the reverser flap (104) in the open position in the duct (202), the drive mechanism comprising additional means that coordinate the passage of the additional flap (602) from the retracted position to the active position with the passage of the reverser flap (104) from the closed position to the open position and vice versa, **characterized in that** the drive mechanism (700) comprises:
- a motor element (702) with a mobile part secured to the mobile cowl (207) to drive it in translation,
- a guide (704) that is secured to the mobile cowl (207) and that comprises a slide part (706) the axis of which is parallel to the translation direction of the mobile cowl (207) and a rotation part (708) that extends the slide part (706) forward and is offset relative to the slide part (706),
- a slider (710) accommodated in the guide (704),
- a first link (712) articulated between the slider (710) and the reverser flap (104),
- a second link (714) articulated between the slider (710) and the additional flap (602),
- an abutment (716) adapted to move the slider (710) of the rotation part (708) towards the slide part (706) when the reverser flap (104) is in the closed position and the additional flap (602) is in the retracted position and when the mobile cowl (207) is moved from the opening position to the closing position.

2. Nacelle (600) for a turbofan (100), said nacelle (600) comprising:
- a fixed cowl (206) and a mobile cowl (207) mobile in translation in a translation direction between a closing position in which it is close to the fixed cowl (206) and an opening position in which it is far aft of the fixed cowl (206),
- a window (210) delimited on the upstream side by the fixed cowl (206) and on the downstream side by the mobile cowl (207), said window (210) being open between a duct (202) for a bypass flow (208) and the exterior of the nacelle (600),
- a reverser flap (104) mounted mobile in rotation about a rotation axis between a closed position in which it obstructs the window (210) and an open position in which it does not obstruct the window (210), and
- a drive mechanism (800) adapted to coordinate the passage from the closed position to the open position of the reverser flap (104) with the passage from the closing position to the opening position of the mobile cowl (207) and vice versa, said drive mechanism being adapted to realize a first combination assuring, from the closed position and from the closing position:
- an aft translation (52) of the mobile cowl (207) in the translation direction to move the mobile cowl (207) from the closing position to the opening position, and
- a rotation (54) of the reverser flap (104) about the rotation axis to move the reverser flap (104) from the closed position to the open position, and
the drive mechanism (800) is also provided to realize a second combination bringing about, from the open position and from the opening position:
- a rotation (58) in the reverse direction of the reverser flap (104) about the rotation axis to move the reverser flap (104) from the open position to the closed position, and
- a forward translation (56) of the mobile cowl (207) in the translation direction to move the mobile cowl (207) from the opening position to the closing position,
the nacelle (600) further comprising an additional flap (602) mounted mobile in rotation about a rotation axis between a retracted position in which it is not positioned in the duct (202) and an active position in which it is positioned across the duct (202) and extends the reverser flap (104) in the open position in the duct (202), the drive mechanism comprising additional means that coordinate the passage of the additional flap (602) from the retracted position to the active position with the passage of the reverser flap (104) from the closed position to the open position and vice versa, **characterized in that** the drive mechanism (800) comprises:
- an actuator (802) with a first rod (804) secured to the mobile cowl (207) and a second rod (806),
- activation means provided to selectively move the first rod (804) and the second rod (806),
- a first link (812) articulated between the second rod (806) and the reverser flap (104),
- a second link (814) articulated between the second rod (806) and the additional flap (602).

3. Nacelle (600) according to either one of Claims 1 and 2, **characterized in that** the additional flap (602) carries a seal (606) that is positioned between the reverser flap (104) and the additional flap (602) when the reverser flap (104) is in the open position and the additional flap (602) is in the active position.

4. Nacelle (600) according to one of Claims 1 and 2, **characterized in that** it comprises at least one deflector (608) which is disposed around the duct (202) at the level of the inlet of the window (210) and which takes the form of an aileron that orients the bypass flow (208) towards the window (210).

5. Turbofan (100) comprising an engine (20) and a nacelle (600) according to one of Claims 1 to 4 surrounding the engine (20) and in which a duct (202) for a bypass flow (208) is delimited between the nacelle (600) and the engine (20).

6. Aircraft (10) comprising at least one turbofan (100) according to Claim 5.
